# EUROPÄISCHE PATENTANMELDUNG

(11) **EP 2 168 801 A1**
(43) Veröffentlichungstag der Anmeldung: **31.03.2010**
(21) Anmeldenummer: 09171193.7
(22) Anmeldetag: 24.09.2009
(51) Int. Cl.: B60K 1/04, B62D 21/18, B62D 21/09, B60L 11/18, B60S 5/06

(54) **Elektrofahrzeug mit einer tragenden Struktur**

(30) Priorität: 26.09.2008 CH 15282008
(71) Anmelder: MINDSET Holding AG, 6005 St. Niklausen (CH)
(72) Erfinder: Hartmann, Stephan, 4500, Solothurn (CH); Rufli, Jens, 2503, Biel (CH); Simmonds, Oliver, 6004, Luzern (CH)
(74) Vertreter: Feldmann, Clarence Paul

(57) **Zusammenfassung**

Es wird ein Elektrofahrzeug (1) beschrieben, welches eine tragende Struktur (2) mit einer Fahrgastzelle oder Ladefläche (24) aufweist. Ein Innenboden (20) der tragenden Struktur (2) bildet einen Aufnahmeraum (23) in Form eines Kanals, welcher einen Teil des Innenbodens (20) und damit einen Teil der tragenden Struktur (2) bildet und zur Aufnahme mindestens einer Energiequelle (7) benutzbar ist. Der Kanal hat eine verstärkende Wirkung auf den Innenboden (20) und schützt die gelagerte Energiequelle (7) bei Kollisionen des Elektrofahrzeuges (1) vor Beschädigungen. Der Innenboden (20) ist mit einem in etwa parallel zum Innenboden verlaufenden Unterboden (21) abdeckbar, wobei der Unterboden als Spritzschutz, aber auch zur weiteren Verstärkung der tragenden Struktur (2) dient.

## Beschreibung

### Technisches Gebiet

Die vorliegende Erfindung beschreibt ein Elektrofahrzeug mit einer tragenden Struktur und einem entlang einer Längsachse des Elektrofahrzeugs verlaufenden Aufnahmeraum.

### Stand der Technik

Elektrofahrzeuge beziehen Ihre Energie üblicherweise aus Energiespeichern, beispielsweise Akkumulatoren und/oder Energiewandlern, beispielsweise Brennstoffzellen und werden heute standardmässig verwendet. Die Energiequellen müssen im Fall der Energiespeicher wieder aufgeladen werden und die Energiewandler im Fall der Brennstoffzelle mit Brennstoffen versorgt werden.

Benutzer von Elektrofahrzeugen sind besonders daran interessiert, dass die Energiequellen nicht schon bei leichten Unfällen zerstört werden. Darüber hinaus wird vor allem die Verhinderung des Austretens von giftigen Substanzen aus den Energiequellen, die Vermeidung von Kurzschlüssen, sowie von Explosionen, welche bei Beschädigungen von Brennstoffzellen infolge Entzündung von Gasen auftreten können, angestrebt.

Um die Energiequelle innerhalb des Elektrofahrzeuges möglichst gut zu schützen und den Schwerpunkt des Elektrofahrzeuges in Richtung der Fahrbahn zu verlagern, werden die Energiequellen möglichst im unteren Teil der Karosserie platziert und ausserhalb der Knautschzone positioniert.

Das US Patent US6315069 offenbart ein Elektrofahrzeug mit einer etwa zentral unterhalb des Elektrofahrzeuges liegenden Energiequelle, welche von einem Unterboden umschlossen wird, wobei der Unterboden unterhalb eines Innenbodens auf welchem eine Fahrgastzelle angeordnet ist, platziert ist. Die Energiequelle ist innerhalb eines muldenförmigen Aufnahmeraumes, welcher etwa annähernd zentriert entlang einer Längsachse des Elektrofahrzeugs liegt, angeordnet.

Durch die Art der Lagerung der Energiequelle und der dazu vorgenommenen Veränderung der Karosseriegestaltung, wird die Stabilität der Karosserie beeinträchtigt, obwohl der Schwerpunkt des Elektrofahrzeuges nach unten in Richtung Fahrbahn verlagert ist.

Die Anordnung der Energiequelle in etwa zentral und entlang der Längsachse ist zwar prinzipiell von Vorteil bei einem Aufprall eines Unfallfahrzeuges von der Seite in etwa senkrecht zur Längsachse, aber neben der Ermöglichung von geringen Batterievolumina, ist der vor allem der Luftwiderstand durch die grosse Querschnittsfläche der Anordnung problematisch und nachteilhaft. Prinzipiell besteht bei einer Umschliessung der Energiequelle bei einem Zusammenstoss die Gefahr, dass die Energiequelle von den Seitenwänden des Aufnahmenraumes zusammengedrückt und beschädigt wird.

Eine Weiterentwicklung offenbart die FR2687352. Ein Elektrofahrzeug mit einer zentral entlang der Längsachse des Elektrofahrzeuges gelagerten Energiequelle wird beschrieben. Die Energiequelle ist oberhalb eines Innenbodens des Elektrofahrzeuges in einem Aufnahmeraum, welcher in die angrenzende Fahrgastzelle hineinragend angeordnet ist, gelagert. Der Aufnahmeraum bildet gewissermassen eine Mittelkonsole innerhalb des Elektrofahrzeuges. Durch diese Anordnung ist die Energiequelle gut bei Unfällen geschützt und durch die Vermeidung eines Eingriffes in die selbsttragende Karosserie ist eine ausreichend hohe Steifigkeit und damit eine geringe elastische Verformung beim Fahren und bei einem Seitenaufprall erreichbar. Die Lagerung der Energiequelle hineinragend in die Fahrgastzelle, nimmt aber Platz innerhalb des Elektrofahrzeugs weg, wodurch das Platzangebot und damit der Komfort für Fahrgäste verringert ist und der Gepäckraum verkleinert ist. Neben dem kleineren Raumangebot, wirkt sich der höher gelegene Schwerpunkt negativ aus. Die hier offenbarte Anordnung bedingt auch eine Auswechslung der Energiequellen innerhalb der Fahrgastzelle.

### Darstellung der Erfindung

Die vorliegende Erfindung hat sich zur Aufgabe gestellt ein Elektrofahrzeug mit einem Aufnahmeraum für eine Energiequelle zu schaffen, welcher die Energiequelle vor Beschädigungen bei einem Seitenaufprall schützt und welcher ein schnelles und einfaches An- und Abkoppeln einer Energiequelle erlaubt.

Eine weitere Aufgabe der vorliegenden Erfindung ist es konstruktionsbedingt durch den Aufnahmeraum eine verbesserte Steifigkeit der selbsttragenden Karosserie zu erreichen, wobei das Platzangebot in der Fahrgastzelle bzw. der Ladefläche und die Grösse des Gepäckraumes nicht verringert werden.

Darüber hinaus werden aerodynamische Vorteile aufgrund eines möglichst kleinen Fahrzeugquerschnittes ausgenutzt.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.

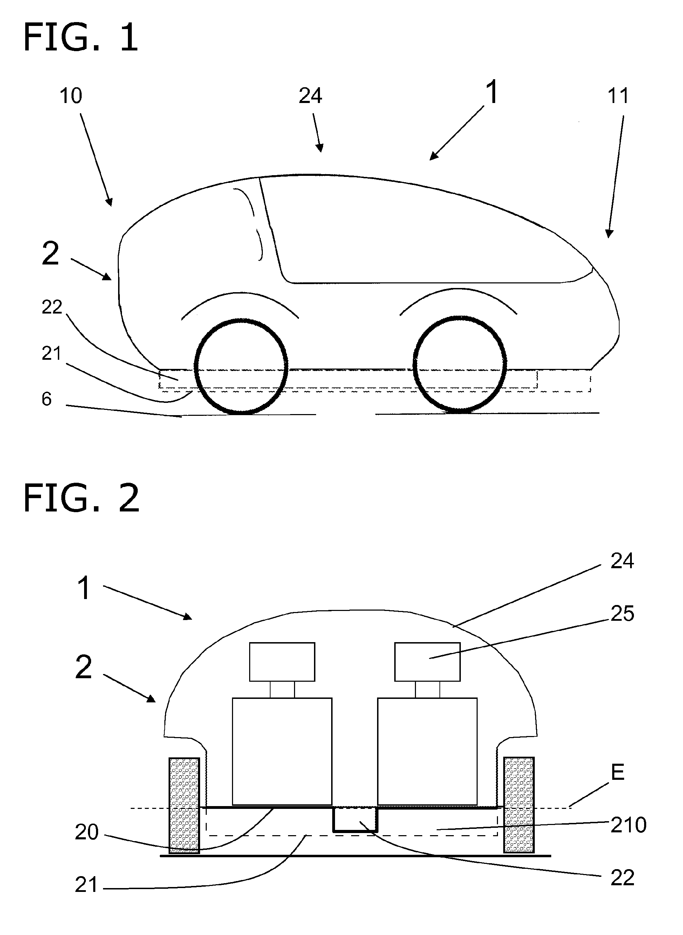

- Figur 1: zeigt eine schematische Seitenansicht eines Elektrofahrzeuges und
- Figur 2: zeigt eine Rückansicht des Elektrofahrzeuges gemäss Figur 1.
- Figur 3: zeigt eine Aufsicht auf einen Innenboden einer Ausführungsform des Elektrofahrzeuges.
- Figur 4a: zeigt eine Schnittzeichnung durch einen Innenboden samt einem Kanal mit eingebrachten Sicken, während
- Figur 4b: eine Schnittdarstellung eines, von einem Unterboden abgedeckten Innenbodens und einer in einem Aufnahmeraum gelagerten Energiequelle.
- Figur 5: zeigt eine schematische 3d-Darstellung einer Energiequelle in einem schubladenartigen Energiequellenträger mit Mitteln zum Be- und Entladen in den Kanal, während
- Figur 6: eine 3d Darstellung eines trogartigen Energiequellenträgers mit darin befindlicher Energiequelle, gelagert in einer absenkbaren Scherenkonstruktion zeigt.

### Beschreibung

Ein erfindungsgemässes Elektrofahrzeug 1 erstreckt sich von einem hinteren Ende 10 zu einem vorderen Ende 11 in Richtung einer Längsachse L und wird von einer tragenden Struktur 2, eine Fahrgastzelle und/oder Ladefläche 24 aufweisend, gebildet. Als Art einer tragenden Struktur 2 kann ein Rahmen, eine Spaceframe, welcher auch als Skelettkarosserie bezeichnet wird, ein Monococ oder eine selbsttragende Karosserie verwendet werden. Zur Gewichtsreduktion ist eine Ausbildung einer tragenden Struktur 2 besonders für Elektrofahrzeuge 1 vorteilhaft.

Die tragende Struktur 2 weist einen Karosserieunterbau auf, welcher einen Innenboden 20 umfasst, auf welchem die Fahrgastzelle und/oder Ladefläche 24 und Interieur 25, beispielsweise Sitze 25 und Instrumententafeln, des Elektrofahrzeuges 1 einbaubar angeordnet sind.

Der Innenboden 20 der tragenden Struktur 2 definiert eine Ebene E der tragenden Struktur 2, oberhalb welcher die Fahrgastzelle 24 das Interieur 25 lagert. Der Innenboden 20 nimmt zusammen mit der tragenden Struktur 2 sämtliche Torsions-, Biege-, **Zug-** und Druckkräfte, welche während der Fahrt oder einem Zusammenstoss mit einem Hindernis auftreten auf.

Für den Betrieb des Elektrofahrzeuges 1 ist eine Energiequelle 7 vorgesehen, welche in einem Aufnahmeraum 22 lagerbar ist. Als Energiequelle 7 bietet sich ein Energiespeicher, beispielsweise ein Akkumulator und/oder ein Energiewandler, beispielsweise eine Brennstoffzelle an.

Der Aufnahmenraum 22 ist mindestens annährend zentrisch entlang der Längsachse L unterhalb der Ebene E verlaufend in den Innenboden 20 eingeformt. Der Aufnahmeraum 22 wird von einem Kanal 220 gebildet, welcher von der Ebene E nach unten kielartig in Richtung Fahrbahn 6 wegragend als Teil der tragenden Struktur 2 ausgestaltet ist. Durch die Ausgestaltung des Innenbodens 20 mit dem Kanal 220 wird die Steifigkeit und die Eigenschwingungsfrequenz des Innenbodens 20 und damit der tragenden Struktur 2 verstärkt, indem der Querschnitt des Innenbodens 20 durch den Kanal 220 vergrössert wird. Die elastische Verformung des Innenbodens 20 wird durch diese verstärkende Bauweise während der Fahrt und vor allem bei einer Kollision des Elektrofahrzeuges 1 mit einem Hindernis vermindert.

Zum Schutz des Innenbodens 20, welcher in Richtung Fahrbahn 6 weist, ist ein Unterboden 21 als Option vorgesehen, welcher den Innenboden 20 ganz oder teilweise umschliessend unterhalb der Ebene E positioniert lösbar oder unlösbar befestigt angeordnet werden kann. Der Unterboden 21 verläuft bevorzugt mindestens annähernd parallel zur Ebene E des Innenbodens 20 und deckt auch den Kanal 220 in Richtung Fahrbahn 6 vollständig ab. Der Raum 210, welcher zwischen Innenboden 20 und Unterboden 21 verbleibt kann als Stauraum oder zur Aufnahme von Funktionsteilen dienen. Neben der Eigenschaft als Spritzschutz und Abdeckung des Innenbodens 20, bewirkt der Unterboden 21 eine weitere Versteifung der tragenden Struktur 2.

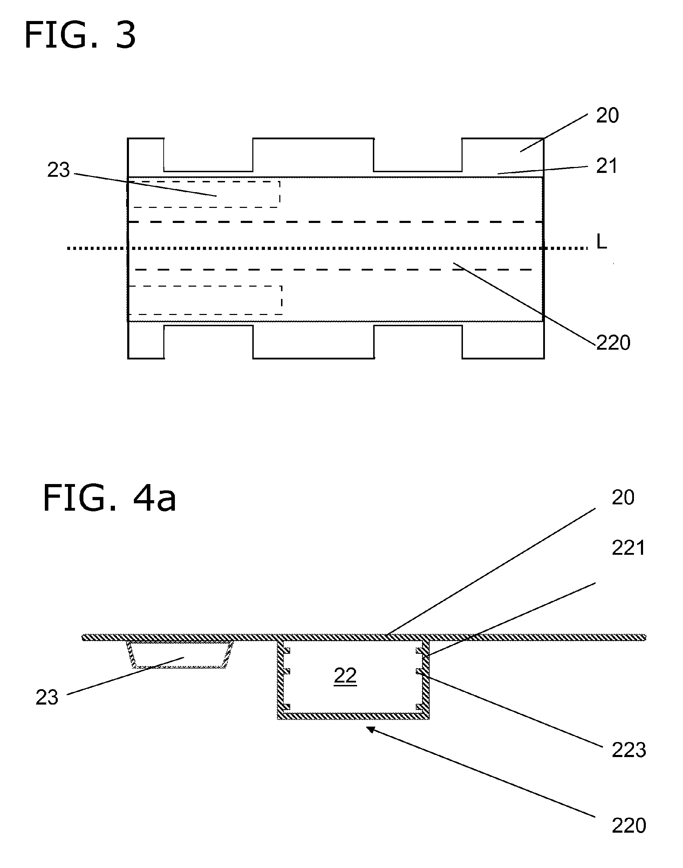

Der Kanal 220 kann entlang der gesamten Länge des Innenbodens 20 vom hinteren Ende 10 bis zum vorderen Ende 11 ragend, wie in Figur 3 gezeigt, oder den Innenboden 20 nur teilweise überspannend ausgeformt sein. Der Kanal 220 weist mindestens eine Kanalwand 221 auf und nimmt mindestens eine Energiequelle 7 in den Aufnahmeraum 22 auf. Die Querschnittsfläche des Kanals 220 kann mehreckig und/oder gerundet ausgestaltet sein, wobei lediglich eine rechteckige Querschnittsfläche in den anliegenden Figuren dargestellt ist. Die Energiequelle 7 kann direkt in den Kanal 220 eingelassen und dort lösbar befestigt gelagert sein.

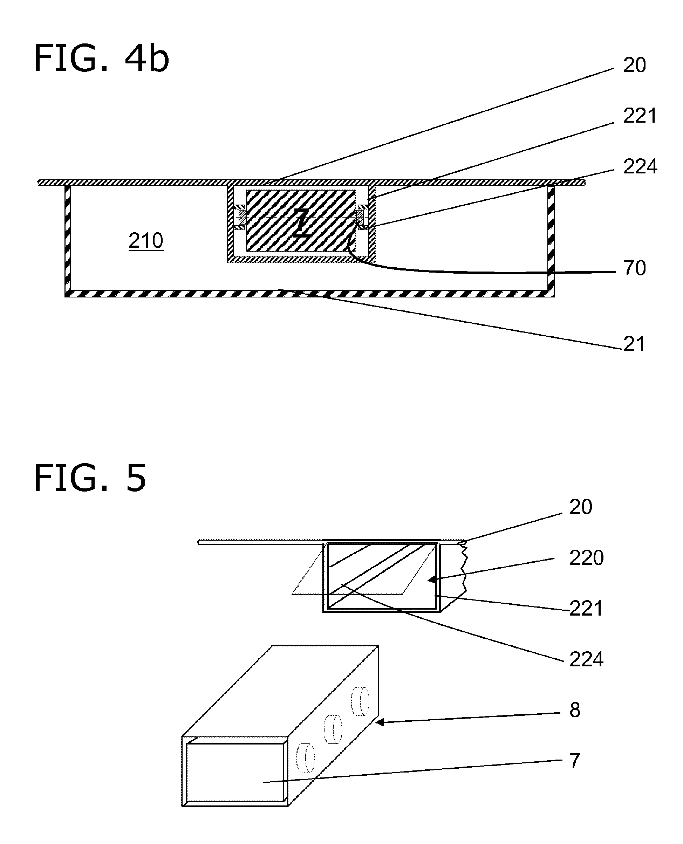

Zur Lagerung der Energiequelle 7 ist es vorgesehen den Aufnahmeraum 22 vom hinteren Ende 10 des Elektrofahrzeuges 1 zugänglich zu machen und die Energiequelle 7 direkt in den Kanal 220 von aussen einzubringen. Der Kanal 220 kann am hinteren Ende 10 mit einer Klappe oder einer Abdeckung verschliessbar ausgestaltet sein, wie in Figur 5 angedeutet. Die Energiequelle 7 muss beim Einführen soweit in den Kanal 220 eingebracht werden, dass Versorgungsleitungen wie Elektroanschlüsse, Steueranschlüsse oder Klimaanschlüsse zwischen der Energiequelle 7 und entsprechenden Anschlüssen des Elektrofahrzeugs 1 verbindbar sind. Wenn Mittel zur Kühlung der Energiequelle 7 vorgesehen sind, muss gewährleistet sein, dass diese Mittel in Form von Kühlanschlüssen ebenfalls innerhalb des Kanals 220 anschliessbar sind. Innerhalb des Kanals 220 können entlang der Kanalwände 221 Laufrollen oder Laufschienen 224 angeordnet sein, welche zur Be- und Entladung der Energiequelle 7 in den Aufnahmeraum 22 dienen. An der Energiequelle 7 können äquivalent dazu entsprechende Laufrollen 70 oder Laufschienen, wie in Figur 4b dargestellt, angebracht werden, wodurch das Durchführen der Energiequelle 7 durch den Kanal 220 erleichtert wird.

Es ist aber auch möglich, dass die Energiequelle 7, in einem Energiequellenträger 8 lösbar oder unlösbar fixierbar ist und der Energiequellenträger 8 in den Kanal 220 eingebracht wird und dort lösbar befestigt wird, wobei auch hier die Versorgungsanschlüsse entsprechend kontaktiert werden müssen. In **Figur 4b** **ist** ein schubladenartiger Energiequellenträger 8 dargestellt, welcher mit Laufschienen 224, entlang der Kanalwand 221 angeordnet, zusammenwirkt.

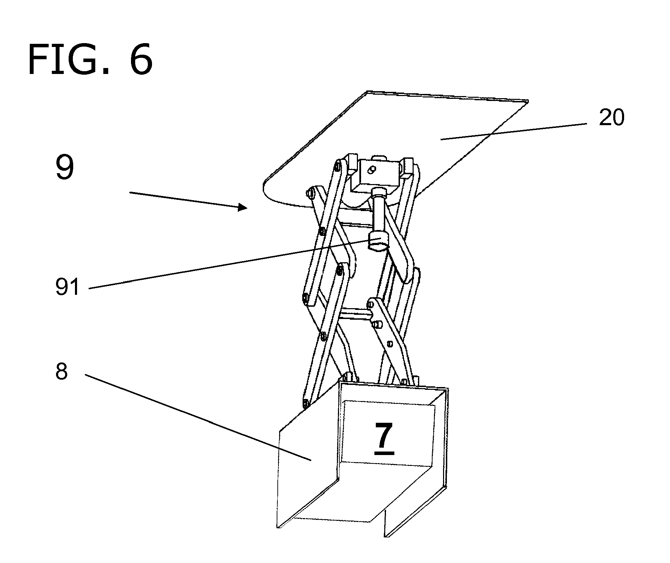

In einer weiteren Ausführungsform ist der Energiequellenträger 8 trogförmig ausgebildet und innerhalb des Aufnahmeraumes 22 absenkbar gestaltet fest mit dem Kanal 220 verbunden. Figur 6 zeigt einen solchen trogförmigen Energiequellenträger 8, welcher an einer Scherenkonstruktion 9 befestigt ist, welche fest mit dem Kanal 220 innerhalb des Aufnahmeraumes 22 fixiert ist und elektromotorisch oder über eine Spindelschraube 91 von Hand absenkbar ist. Bei Benutzung eines trogförmigen und absenkbaren Energiequellenträgers 8 muss der Kanal 220 mit einer bewegbaren Bodenfläche ausgestattet sein und der Unterboden 21 vor dem Be- und Entladen entsprechend entfernt werden. Diese Bodenfläche kann klappbar oder linear parallel zur Längsachse L verschiebbar ausgeführt sein, sodass der Aufnahmeraum 22 nach Betätigung der Bodenfläche zugänglich ist und die innerhalb **des Kanals 220 befestigte Scherenkonstruktion 9 samt** Energiequellenträger 8 aus dem Kanal 220 heraus absenkbar ist. In den abgesenkten Energiequellenträger 8 kann eine Energiequelle 7 eingebracht und fixiert werden und mittels Scherenkonstruktion 9 in den Aufnahmeraum 22 geladen werden. Nach der Beladung mit der Energiequelle 7 wird der Kanal 220 geschlossen und der Unterboden 21 kann den Innenboden 20 umschliessend montiert werden.

**Zur Gewichtsersparnis ist es vorteilhaft in einer Garage eine** Scherenkonstruktion ausserhalb des Elektrofahrzeuges vorzusehen, mit welcher die Energiequelle 7 aus dem Kanal 220 entfernbar ist. Bei dieser Ausführungsform kann der Energiequellenträger 8 mit Hilfe der unabhängigen Scherenkonstruktion nach unten aus dem Kanal 220 entnommen werden, wobei das Elektrofahrzeug 1 kein zusätzliches Gewicht mitführen muss. Das Elektrofahrzeug 1 wird mit dem Kanal 220 zur Auswechslung der Energiequelle 7 über einer erwähnten Scherenkonstruktion im eingefahrenen Zustand positioniert. Anschliessend wird die Scherenkonstruktion in Richtung des Innenbodens 20 ausgefahren, so dass der Energiequellenträger 8 samt Energiequelle 7 aus dem Kanal entnommen werden kann.

Anstelle des trogförmigen Energiequellenträgers 8 ist die Verwendung von Pratzen oder Armen, welche die Energiequelle 7 absenkbar im Kanal 220 befestigt halten, möglich.

Zur Verstärkung des Kanals 220 ist die Ausgestaltung der Kanalwände 221 des Kanals 220 mit einer Mehrzahl von Sicken 223 in Längsrichtung des Kanals 220 verlaufend vorteilhaft. Die Sicken 223 können in den Kanal 220 hineinragend oder nach aussen gerichtet sein, wobei sich die Sicken 223 auch durch Schweissfalze gestalten lassen. Je nach lokalen Bedürfnissen können die Sicken 223 quer oder in Längsrichtung des Kanals 220 verlaufend angebracht sein.

Anstelle der Sicken 223 können auch Rohre quer oder in Längsrichtung des Kanals 220 verlaufend den Kanal 220 verstärkend angebracht sein.

In weiteren Ausführungsformen ist eine Mehrzahl von Absenkungen 23 im Innenboden 20 ausserhalb des Bereichs des Aufnahmeraumes 22 in Richtung der Fahrbahn 6 kielartig weisend, vorgesehen. Diese zusätzlichen Absenkungen 23 haben ebenfalls eine die tragende Struktur 2 verstärkende Wirkung und können als Stauraum unterhalb der Fahrgastzelle oder Ladefläche 24 dienen.

Die Ausgestaltung des hier beschriebenen Aufnahmeraumes 22 bildet eine zusätzliche Versteifung des Innenbodens 20 und damit der tragenden Struktur 2. Durch die lösbare oder unlösbare Befestigung des Unterbodens 21, wobei der Innenboden 20 umschlossen wird, wird die tragende Struktur 2 ebenfalls zusätzlich versteift, wodurch die Energiequelle 7 zusätzlich bei einem Seitenaufprall geschützt wird.

### Bezugszeichenliste

- 1: Elektrofahrzeug
10 hinteres Ende
11 vorderes Ende
- 2: tragenden Struktur
20 Innenboden
21 Unterboden (umschliesst Innenboden nach aussen hin )
210 Raum zwischen Innenboden und Unterboden
22 Aufnahmeraum
220 Kanal
221 Kanalwand
223 Sicke
224 Laufschiene
23 Absenkung
24 Fahrgastzelle oder Ladefläche
25 Interieur (Sitz, Instrumententafel)
6 Fahrbahn
7 Energiequelle
70 Laufrolle
8 Energiequellenträger
9 Scherenkonstruktion
E Ebene (die vom Innenboden gestaltet definiert ist)
L Längsachse

## Patentansprüche

1. Elektrofahrzeug (1) mit einer tragenden Struktur (2) und einem entlang einer Längsachse (L) des Elektrofahrzeugs (1) verlaufenden Aufnahmeraum (22), **dadurch gekennzeichnet, dass** der Aufnahmeraum (22)
ein Kanal (220) mit mindestens einer Kanalwand (221) ist, der bezüglich einer Ebene (E), die von einem Innenboden (20) der tragenden Struktur (2) des Elektrofahrzeugs (1) als Teil der tragenden Struktur (2) gestaltet ist definiert ist und sich bezüglich dieser Ebene (E) nach unten erstreckt und als Aufnahmeraum (22) für mindestens eine Energiequelle (7) dient und als Versteifung der tragenden Struktur (2) wirkt.

2. Elektrofahrzeug nach Anspruch 1, **dadurch gekennzeichnet, dass** sich unter dem Kanal (220) ein Unterboden (21) mindestens annähernd parallel zur Ebene (E) des Innenbodens (20) erstreckt, wobei der zwischen Innenboden (20) und Unterboden (21) verbleibende Raum (210) zur Aufnahme von Funktionsteilen oder als Stauraum dient.

3. Elektrofahrzeug nach Anspruch 1, **dadurch gekennzeichnet, dass** sich der Kanal (220) kielartig in Richtung einer Fahrbahn (6) nach unten erstreckt.

4. Elektrofahrzeug nach Anspruch 1, **dadurch gekennzeichnet, dass** sich die Querschnittsfläche des Kanals (220) mehreckig und/oder gerundet ausgestaltet ist.

5. Elektrofahrzeug nach Anspruch 2 und 3, **dadurch gekennzeichnet, dass** der Innenboden (20) gleichzeitig als zur Fahrbahn (6) weisender Unterboden (21) gestaltet ist.

6. Elektrofahrzeug nach Anspruch 1, **dadurch gekennzeichnet, dass** der Innenboden (20) ausserhalb des Bereiches des Kanals (220) weitere Absenkungen (23) aufweist.

7. Elektrofahrzeug nach Anspruch 1, **dadurch gekennzeichnet, dass** die Kanalwand (221) mit mindestens einer, vorzugsweise mit mehreren in Längsrichtung oder Querrichtung des Kanals (220) verlaufenden Sicken (223) zur lokalen Versteifung verstärkt ist.

8. Elektrofahrzeug nach Anspruch 1, **dadurch gekennzeichnet, dass** die Kanalwand (221) mit mindestens einem Rohr in Längsrichtung oder Querrichtung des Kanals (220) verlaufend zur lokalen Versteifung verstärkt ist.

9. Elektrofahrzeug nach Anspruch 1, **dadurch gekennzeichnet, dass** die Energiequelle (7) direkt in den Kanal (220) einführbar und dort lösbar befestigt lagerbar ist.

10. Elektrofahrzeug nach Anspruch 1, **dadurch gekennzeichnet, dass** an der Kanalwand (221) seitlich mindestens eine Laufschiene (224) angebracht ist durch welche die Energiequelle (7) direkt innerhalb des Kanals (220) bei der Beladung und Entladung von einem hinteren Ende (11) des Elektrofahrzeuges (1) führbar ist.

11. Elektrofahrzeug nach Anspruch 1, **dadurch gekennzeichnet, dass** die Energiequelle (7) in einem Energiequellenträger (8) lösbar oder unlösbar fixiert gelagert ist.

12. Elektrofahrzeug nach Anspruch 11, **dadurch gekennzeichnet, dass** der Energiequellenträger (8) schubladenartig ausgebildet ist und zur Beladung und Entladung aus dem hinteren Ende (10) des Kanals (220) herausziehbar gestaltet ist.

13. Elektrofahrzeug nach Anspruch 11, **dadurch gekennzeichnet, dass** der Energiequellenträger (8) Pratzen oder Arme umfasst, mit welchen die Energiequelle (7) absenkbar im Kanal (220) befestigt lagerbar ist und aus der tragenden Struktur (2) herausführbar ist.

14. Elektrofahrzeug nach Anspruch 11, **dadurch gekennzeichnet, dass** der Energiequellenträger (8) trogartig ausgebildet und innerhalb des Kanals (220) absenkbar angeordnet ist.

15. Elektrofahrzeug nach Anspruch 14, **dadurch gekennzeichnet, dass** der trogartige Energiequellenträger (8) mittels einer Scherenkonstruktion (9) elektromotorisch oder über eine Spindelschraube (91) von Hand absenkbar ist.
